# EUROPEAN PATENT SPECIFICATION

(11) **EP 0 418 398 B1**
(45) Date of publication and mention of the grant of the patent: **18.01.1995**
(21) Application number: 90904944.7
(22) Date of filing: 26.03.1990
(51) Int. Cl.: B29C 45/76

(54) **APPARATUS FOR DISCRIMINATING ACCEPTABLE PRODUCTS FROM REJECTABLE PRODUCTS FOR INJECTION MOLDING MACHINES**
ANORDNUNG FÜR SPRITZGIESSMASCHINEN ZUM UNTERSCHEIDEN BRAUCHBARER TEILE VON AUSSCHUSSSTÜCKEN
APPAREIL UTILISE DANS DES MACHINES DE MOULAGE A INJECTION, POUVANT DIFFERENCIER DES PRODUITS ACCEPTABLES DE PRODUITS A REJETER

(30) Priority: 28.03.1989 JP 74054/89
(43) Date of publication of application: 27.03.1991
(73) Proprietor: FANUC LTD., Minamitsuru-gun, Yamanashi 401-05 (JP)
(72) Inventor: NEKO, Noriaki,FANUC Dai-3 Vira-karamatsu, Minamitsuru-gun,Yamanashi 401-05 (JP); KAMIGUCHI, Masao,Room 6-207,Fanuc Manshonharimomi, Minamitsuru-gun,Yamanashi 401-05 (JP); KOBAYASHI, Minoru,Fanuc Dai-3 Vira-karamatsu, Minamitsuru-gun,Yamanashi 401-05 (JP)
(74) Representative: Billington, Lawrence Emlyn
(86) International application number: JP9000396
(87) International publication number: WO9011174

(56) References cited:
- EP-A- 0 128 722
- EP-A- 0 228 799
- DE-A- 3 545 360
- JP-A-56 162 624
- JP-A-59 174 332
- JP-A-59 224 324
- US-A- 3 859 400
- US-A- 3 977 255
- PLASTVERARBEITER. vol. 34, no. 8, August 1983, SPEYER/RHEIN DE pages 728 - 732; G.BURGHOFF: 'Qualitätssicherung in Spritzgiessbetrieben mit Methoden der Prozessüberwachung'
- PATENT ABSTRACTS OF JAPAN vol. 10, no. 68 (P-437)(2125) March 18, 1986& JP-A-60 207 912 (TOSHIBA K.K. ) October 19, 1985

## Description

The present invention relates to an article conformity discriminating apparatus for an injection molding machine, and more particularly, to an apparatus capable of automatically discriminating the conformity of articles with accuracy.

Conventionally, the conformity of articles mass-produced by means of an injection molding machine is discriminated by using a conforming article sample. To attain this, a sample is previously saved which has been manufactured in a molding process for deciding optimum injection molding conditions and judged to be conforming by inspection, before the mass production. A required number of articles are extracted from each lot of mass-produced articles, and these extracted samples are compared, mainly visually, with the conforming article sample, whereby the conformity of the articles of each lot is discriminated.

According to the conventional method described above, the conforming article sample must be saved for each type of articles (molds). As the types of articles (molds) increase in number, therefore, the number of conforming articles to be saved increases, so that it becomes difficult to secure a storage space. Since the article conformity discrimination is based mainly on visual inspection, moreover, it sometimes lacks in reliability. If the conforming article samples are saved for a long time, furthermore, they may possibly suffer changes on standing. In such a case, the reliability of the article conformity discrimination based on the conforming article samples lowers.

Also in the prior art, EP-A-0 128 722 discloses an article conformity discriminating apparatus for an injection molding machine, according to the preamble of the attached claim 1. Instead of employing conforming article samples with which to compare subsequently produced articles, in EP-A-0 128 722 conformity discrimination is achieved by comparing reference values of internal die pressure during production of a conforming article, with the corresponding pressure values produced during the production of subsequent articles.

The object of the present invention is to provide such an article conformity discriminating apparatus for an injection molding machine, which is capable of automatically discriminating the conformity of articles with accuracy without using a conforming article sample, and which is also capable of compensating for shift between the two sets of compared resin pressure values.

According to the present invention there is provided an article conformity discriminating apparatus for an injection molding machine, comprising: pressure sampling means for periodically sampling a resin pressure; memory means for storing resin pressures previously sampled by said pressure sampling means when a conforming article was molded, as reference resin pressures providing a reference resin pressure transition pattern; and discrimination means for discriminating conformity of a subsequent article by comparing each actual resin pressure sampled by said pressure sampling means during the execution of the actual molding cycle producing said subsequent article, with the reference resin pressure corresponding thereto, characterised in that when the reference resin pressure transition pattern and the actual molding cycle resin pressure transition pattern, the latter provided by said sampled actual resin pressures, are shifted with respect to each other due to, for example, a deviation in injection start timing between the actual molding process and the conforming article molding process, the discrimination means is operable to compensate this shift by detecting the first actual resin pressure sample which exceeds a predetermined pressure, and also the first reference resin pressure sample which exceeds said predetermined pressure, and by deciding that these two sample pressures, or the preceding two sample pressures, correspond to each other on the two resin pressure transition patterns, as do the subsequent successive pairs of pressures on the two resin pressure transition patterns, thereby to provide the corresponding sampled pressures to be compared as aforesaid in order to discriminate conformity of an article produced by the executed actual molding cycle.

According to the present invention, as described above, the resin pressures, previously sampled by means of the sampling means when the conforming article is molded, are stored as the reference resin pressures, and the conformity of the articles is discriminated by comparing each actual resin pressure sampled by means of the sampling means during the execution of the actual molding cycle with the reference resin pressure corresponding thereto, by means of the discrimination means, so that the article conformity can be automatically discriminated even when there is a shift between the two resin pressure transition patterns. Thus, conforming article samples are unnecessary, so that the problem of the security of a sample storage space or the like, encountered when the conforming article samples are used, can be eliminated. Further, this method is higher in reliability than an operator's visual inspection.
Fig. 1 is a block diagram showing the principal part of an injection molding machine furnished with an article conformity discriminating apparatus adaptable according to the present invention;
Fig. 2 is a flow chart showing a basic article conformity discrimination process, not in accordance with the present invention, executed by means of a microprocessor for programmable machine controller shown in Fig. 1;
Fig. 3 is a graph showing a resin pressure sampling operation of the article conformity discriminating apparatus of Fig. 1 during a process for molding conforming articles;
Fig. 4 is a graph showing a resin pressure sampling operation in a molding cycle and an allowable value used for the article conformity discrimination process;
Fig. 5 is a diagram showing a pressure data table used for the article conformity discrimination process;
Fig. 6 is a diagram showing a mold file used for the article conformity discrimination process;
Fig. 7 is a flow chart showing an article conformity discrimination process executed by means of an apparatus according to the present invention; and
Fig. 8 is a graph showing changes of an actual resin pressure and a reference resin pressure with the passage of time, in a molding cycle according to the invention.

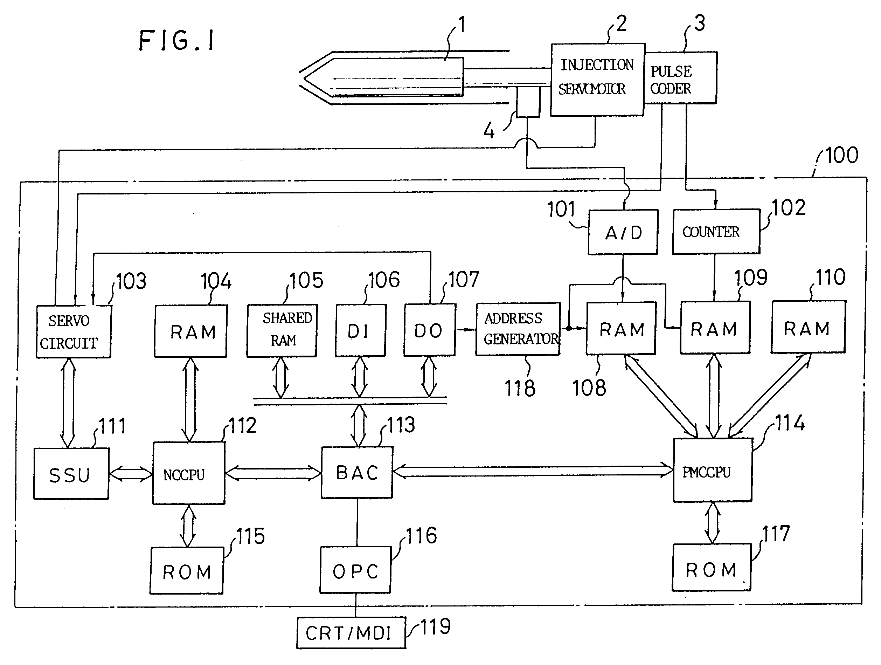

An electrically-operated injection molding machine furnished with an article conformity discriminating apparatus according to the present invention comprises various units, such as an injection unit, a mold clamping unit, an article ejecting unit (ejector), etc. Referring to Fig. 1, the injection unit includes a screw 1, an injection servomotor 2 for axially driving the screw 1, and a servomotor (not shown) for rotating the screw 1. The injection servomotor 2 is fitted with a pulse coder 3 for detecting the rotational motor position (moved position with respect to the axial direction of the screw), and the screw 1 is fitted with a pressure sensor 4 for detecting a resin pressure (axial reaction from molten resin acting on the screw). Further, the injection molding machine comprises a numerical control device (hereinafter referred to as NC device) 100 for controlling the various units of the injection molding machine in cooperation with a programmable machine controller (not shown).

The NC device 100 includes a numerical control microprocessor (hereinafter referred to as NCCPU) 112 for controlling various servomotors through a servo interface 111 and various servo circuits connected individually to pulse coders (only that pulse coder and that servo circuit which correspond to the injection servomotor 2 are denoted by numerals 3 and 103, respectively). The NCCPU 112 is connected with a random access memory (RAM) 104 used for temporary storage of data or the like and a read-only memory (ROM) 115 stored with a management program for controlling the whole injection molding machine.

Also, the NC device 100 includes a microprocessor (hereinafter referred to as PMCCPU) 114 for the programmable machine controller, and the PMCCPU is connected with a RAM 110 used for temporary storage of data or the like and a ROM 117 stored with a sequence program or the like for controlling sequence operation of the injection molding machine. The PMCCPU 114 contains therein flag memories (not shown) and registers (not shown) for individually storing first flag information F1, second flag information F2, an allowable value ε and an allowable frequency N, used for an article conformity discrimination process mentioned later, and contains therein a defective sample counter (not shown) and a processing period counter (not shown) used for the article conformity discrimination process.

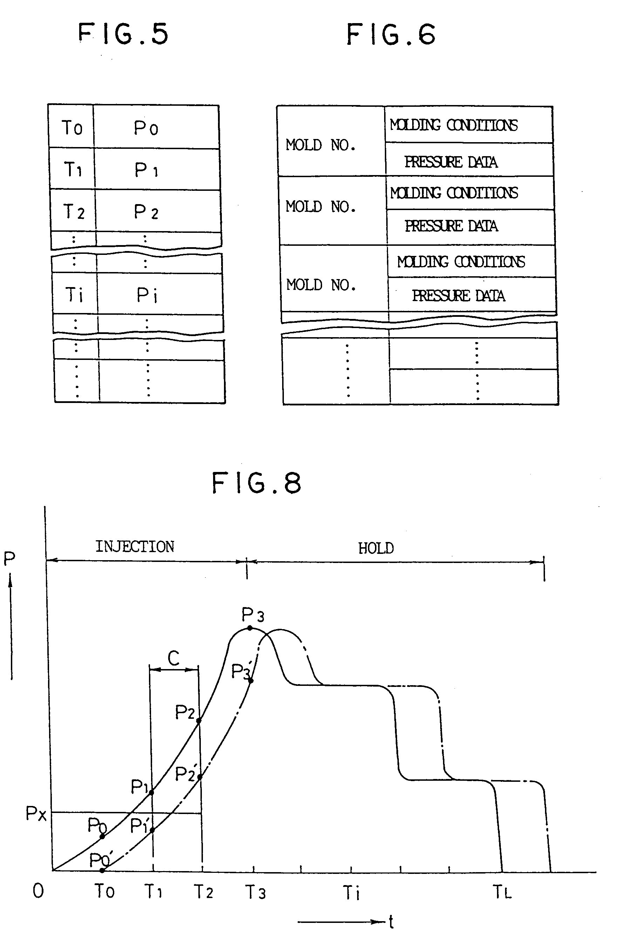

A bus arbiter controller (hereinafter referred to as BAC) 113 interposed between the two CPUs 112 and 114 is connected with buses of a shared memory 105, an input circuit 106, and an output circuit 107, so that one of the CPUs 112 and 114 is selectively allowed, under the control of the BAC 113, to access a desired one of the elements 105 to 107 in each operation execution cycle of the CPUs 112 and 114. The shared memory 105, which is formed of a nonvolatile RAM, includes a program storage section for storing an NC program for control of the injection molding machine, etc., and a setting section for storing various set values, parameters and macro variables indicative of molding conditions. More specifically, the setting section of the shared RAM 105 is arranged to store mold files (Fig. 6) each consisting of molding conditions which change in dependence on the type of the mold, and pressure data in injection and hold processes.

The input circuit 106 is connected to various sensors, etc., provided in the various units of the injection molding machine, while the output circuit 107 is connected to the various servo circuits, including the servo circuit 103, and an address generator 118. The address generator 118 is connected to two RAMs 108 and 109 accessible from the PMCCPU 114. The RAM 108 is connected to an A/D converter 101 connected to the pressure sensor 4, so that an A/D converter output (pressure data) indicative of the resin pressure is stored in an address region specified by an output signal from the address generator 118. Further, the RAM 109 is connected to a counter 102 for accumulatively counting feedback pulses from the pulse coder 3, so that a counter output (position data) indicative of the screw position is stored in an address region specified by the address generator output.

A manual data input device (hereinafter referred to as CRT/MDI) 119 with a CRT display unit, which is connected to the BAC 113 through an operator panel controller 116, is provided with software keys, ten-keys, etc., used for the entry of various data and for the display of various setting displays on a CRT screen.

In the following, a basic operation of the injection molding machine constructed as above will be explained. This operation does not include the pattern shift compensation of the present invention, and is provided for the purpose of explaining a basic non-compensated operation.

Prior to mass-production of articles, optimum molding conditions for each type of the article (mold used) are decided. To this end, when an operator operates the CRT/MDI 119 to input temporary molding conditions depending on the type of the mold (not shown), after mounting the mold to the injection molding machine, these conditions are stored in the setting section of the shared RAM 105. Thereafter, sequence control is performed by the PMCCPU 114, and the drive or the servomotors for the individual axes is controlled by the NCCPU 112, in accordance with the sequence program stored in the ROM 117 and the NC program and the temporary molding conditions stored in the shared RAM 105, whereby one injection molding cycle is executed.

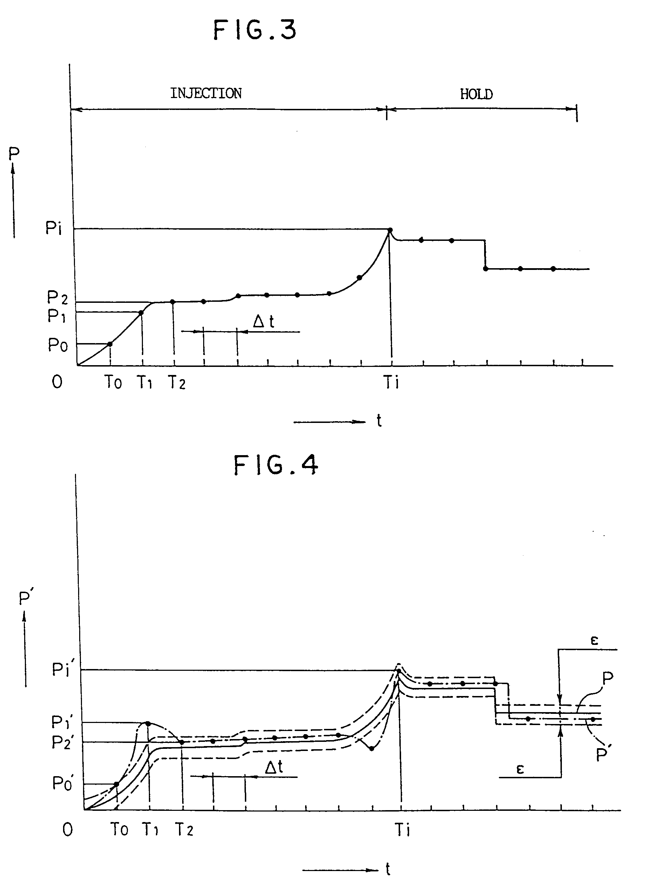

During this time, an analog output from the pressure sensor 4, indicative of the resin pressure acting on the screw 1, is converted into a digital signal in the A/D converter 101. As the screw 1 moves, moreover, the feedback pulses delivered from the pulse coder 3 are accumulatively counted by the counter 102. The accumulated value indicates the screw position. When the PMCCPU 114 reads an injection start command from the program, it actuates the address generator 118. Thus, the address generator 118 starts delivering an addressing output to the RAMs 108 and 109 upon start of the injection process. This addressing output is updated at intervals of a sampling period Δt. As a result, a resin pressure Pi for each sampling period Ti (i = 0, 1, 2, ^{...}) is stored in each corresponding address region of the RAM 108 (Figs. 3 and 5). Namely, pressure data is tabulated and stored.

When the molding process based on the temporary molding conditions ends, the conformity of the resultant molded article is discriminated by the operator's visual check and a dimensional check using a measuring instrument. Generally, the molded article produced by the molding process based on the temporary molding conditions is subject to various molding defects, such as dimensional defects, warps, sink marks, burrs, etc., so that the operator changes the temporary injection molding conditions depending on the kinds of the molding defects, and then restarts the operation of the injection molding machine. During the execution of this molding process, the resin pressures Pi stored in the RAM 108 during the execution of the preceding molding process are updated for newly sampled values.

Thereafter, the aforesaid molding process is repeated, and if it is concluded that the optimum molding conditions for the stable manufacture of conforming articles are obtained, the operator operates predetermined software keys of the CRT/MDI 119 to cause a mold file display to be displayed on the CRT screen, operates the ten-keys to input a mold number indicative of the type of the mold used in the aforesaid molding process, and further operates a registration key. In response to the operation of the registration key, the optimum molding conditions stored in the shared RAM 105 for the manufacture of conforming articles and the resin pressures Pi of Fig. 3 (pressure data or reference resin pressures of Fig. 6) stored in the RAM 108 for the manufacture of conforming articles are read out, and the mold file (Fig. 6) consisting of the optimum molding conditions and the pressure data for the aforesaid mold is stored in the shared RAM 105.

Thereafter, mold files for various molds are individually prepared as required, following the same procedure as aforesaid, and are stored in the shared RAM 105.

In mass-producing the articles, the operator selects the mold file display, and further specifies the mold number indicative of the mold used. Under the control of the PMCCPU 114 responding to this operation, the optimum molding conditions are read out from the mold file corresponding to the mold number, and are stored in the setting section of the shared RAM 105. In case of discriminating the conformity of articles, the operator operates a conformity discrimination execution key of the CRT/MDI 119. In response to this operation, the PMCCPU 114 sets a first flag F1 to the value "1" which is indicative of the execution of the article conformity discrimination. Further, the operator inputs the allowable value ε and the allowable frequency N, used for the article conformity discrimination process mentioned later, through the CRT/MDI 119. The allowable value ε and the allowable frequency N, which are previously experimentally decided, for example, are settled according to the dimensional tolerances of various parts of the articles, which depend on the type of the articles, and the allowable degrees of warps, sink marks, burrs, etc. For precision parts which should be subject to strict criteria for article conformity discrimination, for example, the allowable value ε and the allowable frequency N are set individually to small values.

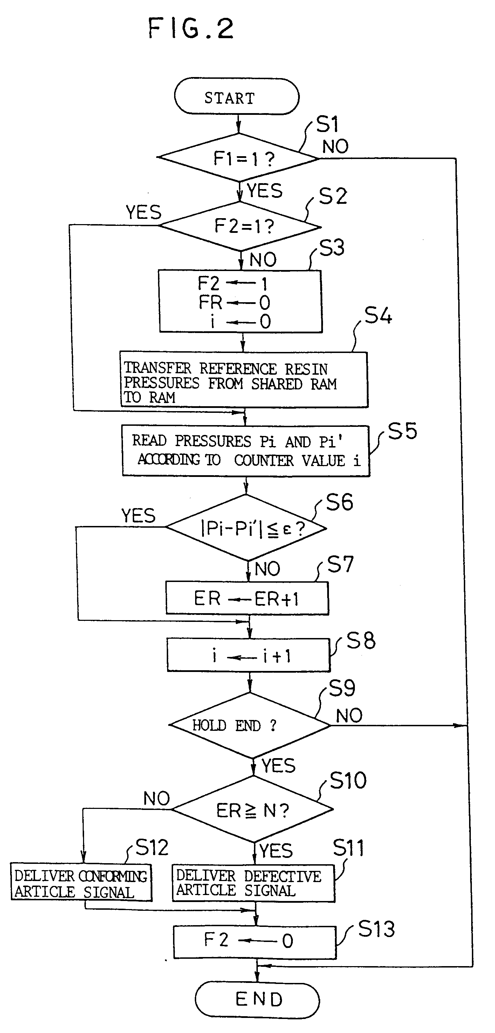

During the execution of the molding cycle in accordance with the optimum molding conditions, the resin pressure and the screw position are sampled at intervals of the period Δt, and the article conformity discrimination process shown in Fig. 2 is repeatedly executed in synchronism with this sampling operation by means of the PMCCPU 114.

Namely, in each processing period, the PMCCPU 114 determines whether or not the first flag F1 is set to "1" (step S1). If the first flag F1 is set, the PMCCPU 114 further determines whether or not the second flag F2 is set to the value "1" which is indicative of the continuation of the article conformity discrimination (step S2). The determination result at step S2 in a processing period T0 immediately after the start of the injection process is negative. In this case, the PMCCPU 114 sets the second flag F2 to the value of "1" in order to start the conformity discrimination for the article manufactured in the present molding cycle, and resets a value ER in the defective sample counter and a value i in the processing period counter to "0", respectively (step S3). Then, the PMCCPU 114 causes the RAM 110 to store the reference resin pressures Pi (i = 0, 1, 2, ^{...}) read out from the mold file which corresponds to the mold number specified beforehand prior to the start of the molding process (step S4).

Next, the PMCCPU 114 reads out the reference resin pressure Pi (represented by solid line in Fig. 4) specified by the present counter value i from the RAM 110, also reads out a sampled actual resin pressure Pi' (represented by chain line in Fig. 4) from the RAM 108 (step S5), and determines whether or not the absolute value |Pi - Pi'| of the difference between these two values is equal to or smaller than the allowable value ε (step S6). If the absolute value is equal to or smaller than the allowable value ε, and therefore, if the actual resin pressure Pi' falls within the allowable range defined by broken lines in Fig. 4, it is concluded that the actual resin pressure Pi' is normal, and step S8, mentioned later, is entered. If the absolute value is greater than the allowable value ε, on the other hand, it is concluded that the actual resin pressure is improper, and the value ER in the defective sample counter is updated to a value of "ER+1" (step S7). Subsequently, the PMCCPU 114 updates the value i in the processing period counter to a value "i+1", at step S8, and then determines whether or not a hold end command is read out from the program (step S9). If the hold process is not finished, the article conformity discrimination process of Fig. 2 for the present processing period is terminated.

In the processing period Ti (i = 0, 1, 2, ^{...}) other than the processing period T0 immediately after the start of the injection process, the PMCCPU 114 determines whether or not the first flag F1 is reset to the value "0" in response to the operator's operation to release the conformity discrimination execution key (step S1). If the flag F1 is not reset, step S2 is entered. Since the decision at step S2 is affirmative, the corresponding ones of steps S5 to S9 mentioned before are executed in succession.

At step S9 in a later processing period, if it is concluded that the hold process is finished, the PMCCPU 114 determines whether or not the value ER in the defective sample counter, which is indicative of the number of times the actual resin pressure Pi' (i = 0, 1, 2, ^{...}) is found to be improper during the time period between the start of the injection process and the end of the hold process, is equal to or smaller than the allowable frequency N, which is indicative of the maximum frequency of generation of the improper actual resin pressure Pi' which entails no molding defect (step S10).

If the counter value ER is greater than the allowable frequency N, a defective article signal is delivered (step S11), and if the counter value ER is equal to or smaller than the allowable frequency N, on the other hand, a conforming article signal is delivered (step S12). In response to the defective article signal or the conforming article signal, the result of the article conformity discrimination is displayed on the CRT screen. Then, the PMCCPU 114 resets the second flag F2 to the value "0" which is indicative of the end of the conformity discrimination process (step S13), whereupon the conformity discrimination process of Fig. 2 for the article manufactured in the present molding cycle ends.

The conformity discrimination process of Fig. 2 is also executed in like manner for the next molding cycle.

In the following, an injection molding machine provided with an article conformity discriminating apparatus adapted in accordance with the present invention will be explained.

As compared with the previously-described apparatus which discriminates the conformity of the articles by comparing each actual resin pressure sampled during the execution of the actual molding process for mass production with the corresponding resin pressure (reference resin pressure) sampled during the execution of the conforming article molding process for the decision of the optimum conditions, i.e., by comparing the actual resin pressure and the reference resin pressure sampled during the same sampling period, the apparatus adapted according to the present invention differs therefrom in that it performs the article conformity discrimination in a more appropriate manner by comparing the respective time-based transition patterns of the actual resin pressure and the reference resin pressure. By comparing the pressure transition patterns in this manner, the deviation in injection start timing and the difference in the manner of rise of the resin pressure, between the actual molding process and the conforming article molding process, can be compensated.

Basically, the adapted apparatus is constructed in the same manner as the apparatus of the first embodiment (Fig. 1). The apparatus of the present embodiment, however, is arranged to determine whether or not a predetermined pressure Px (Fig. 8) is attained by each of the reference resin pressures read out successively in the article conformity discrimination process, in order to compare the pressure transition patterns with each other. To this end, the PMCCPU 114 contains therein a register for storing the predetermined pressure Px previously set by the operator prior to the start of the actual molding process. Further, the PMCCPU is provided with a register group (mentioned later) used for the article conformity discrimination process. Unlike the apparatus of the first embodiment in which the reference resin pressures are stored in the RAM 110 during the execution of the article conformity discrimination process (step S4 of Fig. 2), moreover, the apparatus of the present embodiment is so designed as to store the reference resin pressures in the RAM 110 immediately when the mold number is specified at the start of the actual molding process for mass production.

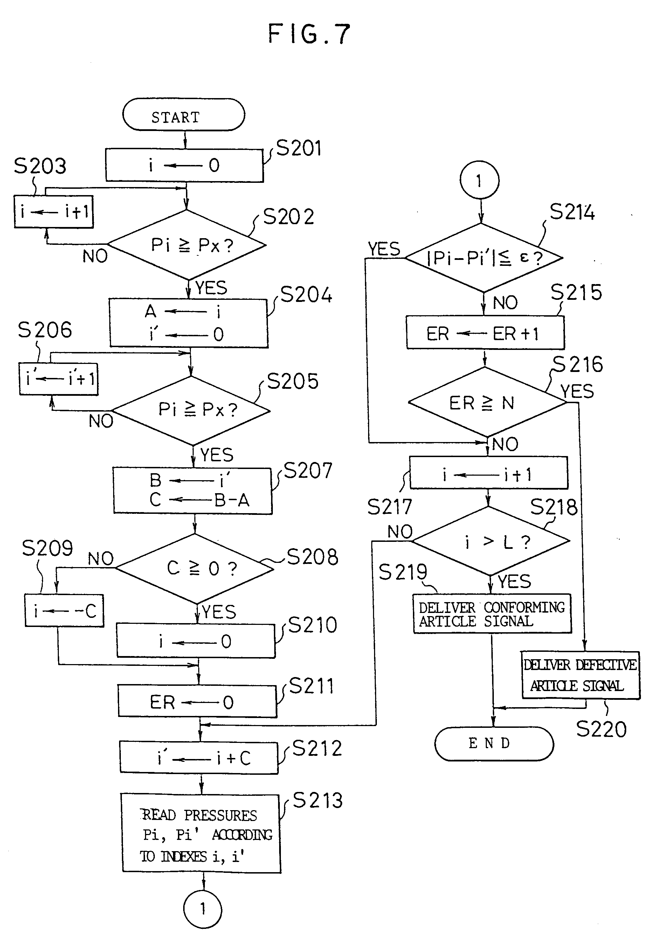

Referring now to Figs. 7 and 8, the operation of the article conformity discriminating apparatus according to the present invention will be described.

When a metering start command is read from the program after the completion of the injection and hold processes, during the execution of the actual molding process, the PMCCPU 114 sets the value of the index (value in the processing period counter) i to "0" (step S201). Then, in accordance with the index i (= 0), a determination is made as to whether or not a zeroth reference resin pressure P0 (generally; ith reference resin pressure Pi) read out from the RAM 110 is equal to or higher than the predetermined pressure Px (step S202). If the decision is negative, the index i is updated to the value "i+1" (step S203), and, at step S202, the reference resin pressure Pi corresponding to the updated index i is compared with the predetermined pressure Px. If the decision at step S202 is affirmative, the PMCCPU 114 causes a register A to store the index i at that time, i.e., the index i indicative of the sampling period Ti during which the resin pressure equal to or higher than the predetermined pressure Px is detected for the first time in the conforming article molding process, and resets a second index i' to the value "0" (step S204). In the example shown in Fig. 8, the reference resin pressure Pi represented by solid line attains the predetermined pressure Px during a first period T1, so that the value "1" is stored in the register A.

In accordance with the second index i', the PMCCPU 114 then reads out the actual resin pressure Pi' detected during an i'th period Ti' for the actual injection and hold processes from the corresponding address region of the RAM 108, and determines whether or not the pressure Pi' is equal to or higher than the predetermined pressure Px (step S205). If the decision in this step is negative, the index i' is updated to a value "i'+1" (step S206), and, at step S205, the reference resin pressure Pi' corresponding to the updated index i' is compared with the predetermined pressure Px. If the decision at step S205 is affirmative, the PMCCPU 114 causes a register B to store the second index i' at that time, i.e., the index i' indicative of the sampling period Ti during which the resin pressure equal to or higher than the predetermined pressure Px is detected for the first time in the actual molding process. Also, the PMCCPU causes a register C to store a value obtained by subtracting the stored value i in the register A from the stored value i' in the register B, that is, a value "i'-i" which is indicative of the deviation in that point of time at which the resin pressure equal to or higher than the predetermined pressure Px is sampled for the first time, between the conforming article molding process and the actual molding process (step S207). In the example shown in Fig. 8, the actual resin pressure Pi' represented by chain line attains the predetermined pressure Px during a second period T2, so that the value "1" is stored in the register C.

Further, the PMCCPU 114 determines whether or not the stored value in the register C is "0" or positive (step S208). If the decision is affirmative, that is, if it is concluded that the point of time when the resin pressure not less than the predetermined pressure Px is sampled for the first time in the actual molding process is behind its corresponding point of time in the conforming article molding process, as in the case of Fig. 8, the PMCCPU 114 sets the index i, employed to address the RAM 110 in association with step S213 for reference resin pressure readout (mentioned later), to the value "0" (step S210). If it is concluded at step S208, on the other hand, that the stored value in the register C is negative, that is, the resin pressure not less than the predetermined pressure Px is sampled earlier in the actual molding process than in the conforming article molding process, the address index i is set to a value of the opposite sign (> 0) equal in absolute value to the value stored in the register C (step S209).

Subsequently, the PMCCPU 114 sets the second index i', employed to address the RAM 108 in association with the actual resin pressure readout step S213 (mentioned later), to a value equal to the sum of the index i and the value stored in the register C (step S212). More specifically, if the stored value in the register C is "0" or positive, the index i is set to "0" at step S210, so that the second index i' is set to a value equal to the stored value in the register C (index i' is set to "1" in the case of Fig. 8). If the stored value in the register C is negative, on the other hand, the index i is set to a value of the opposite sign equal in absolute value to the stored value in the register C at step S210, so that the second index i' is set to "0."

Then, the PMCCPU 114 successively executes steps S213 to S215 which correspond individually to steps S5 to S7 of Fig. 2 associated with the first embodiment. As a result, each of the actual resin pressures Pi' sampled in respective sampling periods is compared with the reference resin pressure Pi sampled in a corresponding period on the pressure transition pattern even when the injection start timing varies between the actual molding process and the conforming article molding process, in contrast with the case of the first embodiment in which each actual resin pressure Pi' is compared with the reference resin pressure Pi sampled in the same sampling period. Consequently, the deviation in injection start timing and hence the difference in the manner of rise of the resin pressure are compensated, and the propriety of the actual resin pressure is properly discriminated.

If it is then concluded at step S214 that the absolute value |Pi - Pi'| of the difference between the reference resin pressure and the actual resin pressure is not greater than the allowable value ε, that is, the actual resin pressure is proper, step S217 (mentioned later) is entered. If it is concluded, on the other hand, that the absolute value of the pressure difference exceeds the allowable value ε, that is, the actual resin pressure Pi' is improper, the PMCCPU 114 updates the value ER in the defective sample counter to the value "ER+1," and then determines whether or not the updated counter value ER is not less than the allowable frequency N, indicative of the maximum frequency of generation of the improper actual resin pressure Pi' which entails no molding defect, at step S216 corresponding to step S10 of Fig. 2.

If the PMCCPU 114 concludes at step S216 that the counter value ER is less than the allowable frequency N, it updates the index i to the value "i+1" at step S217, and then determines whether or not the updated index i is greater than a value L, which is indicative of the final address of the RAM 110 stored with the reference resin pressure in a final sampling period TL (step S218). If the index i is not greater than the value L, the second index i' is updated at step S212, whereupon step S213 mentioned before and the subsequent steps are executed.

If it is concluded at step S216, thereafter, that the counter value ER exceeds the allowable frequency N, the PMCCPU 114 delivers a defective article signal (step S220). If it is concluded at step S218 that the value L is exceeded by the index i before the allowable frequency N is exceeded by the counter value ER, on the other hand, the PMCCPU 114 delivers a conforming article signal (step S219).

In the aforementioned first embodiment, the result of the article conformity discrimination is displayed on the CRT screen. Alternatively, a defective article may be automatically sorted by driving air nozzles, distributing members, etc. in accordance with memory information, which is indicative of the discrimination result, while the article is being ejected by means of an ejector or transported by means of a conveyor. Further, the operation of the injection molding machine may be stopped, concluding that a conforming article cannot be molded, when a count value of a counter, which is arranged to be resettable in response to supply of a conforming article signal, exceeds a predetermined value, the count value indicating the frequency of continuous generation of defective article signals.

Although the present invention is applied to an electrically-operated injection molding machine in the foregoing description, the invention may also be applied to a hydraulically-operated injection molding machine. In the embodiments, moreover, the pressure sensor is used to detect the reaction force of the resin acting on the screw. Alternatively, however, a pressure sensor disposed within the mold may be used.

In the first embodiment, the article conformity is discriminated by comparing the actual resin pressure and the reference resin pressure. If a constant amount of resin is measurable in a metering process preceding the injection process, however, the resin pressure can be expressed as a function of the screw position. Hence, the article conformity can be discriminated by previously sampling the screw position as reference screw position data during the execution of the conforming article molding process by means of the RAM 109 of Fig. 1, and then comparing the actual screw position, sampled during the execution of the actual molding process, with the reference screw position. Alternatively, moreover, screw position transition patterns may be compared with each other on the same principle of operation as the second embodiment in which the sampled resin pressure transition patterns are compared. In such an adaptation, the resin pressure transition patterns are actually screw position transition patterns, with the sampled pressure valves being screw position valves.

In the second embodiment, the indexes i and i', which are indicative of the sampling frequencies before the reference resin pressure Pi and the actual resin pressure Pi' which exceed the predetermined pressure Px are detected for the first time, respectively, are discriminated. Alternatively, a reference resin pressure Pn detected in an n-th sampling period may be used, and a sampling frequency i' until the actual resin pressure Pi' exceeding the reference resin pressure Pn is first detected may be discriminated. In this case, the processes for storing the index i in the register A at steps S201 to 203 and step S204 are unnecessary. In the second embodiment, furthermore, the reference resin pressure Pi or the actual resin pressure Pi' before the attainment of the predetermined pressure Px is compared with that actual resin pressure or reference resin pressure which corresponds thereto on the pressure transition pattern. Alternatively, the reference resin pressure and its corresponding actual resin pressure not less than the predetermined pressure Px may be compared with each other. In this case, the respective initial values of the address indexes i and i' for the resin pressure readout of Fig. 2 are set to those sampling frequencies after which the reference resin pressure and the actual resin pressure exceeding the predetermined pressure are first detected, and the two indexes i and i' are updated to the values i+1" and "i'+1," respectively, every time the comparison of the two resin pressures is finished.

## Claims

1. An article conformity discriminating apparatus for an injection molding machine, comprising:
pressure sampling means (4) for periodically sampling a resin pressure;
memory means (110) for storing resin pressures previously sampled by said pressure sampling means (4) when a conforming article was molded, as reference resin pressures providing a reference resin pressure transition pattern; and
discrimination means (114) for discriminating conformity of a subsequent article by comparing each actual resin pressure sampled by said pressure sampling means (4) during the execution of the actual molding cycle producing said subsequent article, with the reference resin pressure corresponding thereto;
characterised in that when the reference resin pressure transition pattern and the actual molding cycle resin pressure transition pattern, the latter provided by said sampled actual resin pressures, are shifted with respect to each other due to, for example, a deviation in injection start timing between the actual molding process and the conforming article molding process, the discrimination means (114) is operable to compensate this shift by detecting the first actual resin pressure sample which exceeds a predetermined pressure (Px), and also the first reference resin pressure sample which exceeds said predetermined pressure (Px), and by deciding that these two sample pressures, or the preceding two sample pressures, correspond to each other on the two resin pressure transition patterns, as do the subsequent successive pairs of pressures on the two resin pressure transition patterns, thereby to provide the corresponding sampled pressures to be compared as aforesaid in order to discriminate conformity of an article produced by the executed actual molding cycle.

2. An article conformity discriminating apparatus for an injection molding machine according to claim 1, wherein said discrimination means (114) is operable to output a signal indicative of the result of the discrimination.

3. An article conformity discriminating apparatus for an injection molding machine according to claim 1 or 2, wherein said pressure sampling means (4) is operable to sample the resin pressure in injection and hold processes in a molding cycle.

## Patentansprüche

1. Unterscheidungs-Vorrichtung zur Kontrolle der Artikel-Übereinstimmung für eine Spritzgießmaschine, welche Vorrichtung umfaßt:
ein Druckabtastmittel (4) zum periodischen Abtasten eines Kunstharz-Drucks,
ein Speichermittel (110) zum Speichern von Kunstharz-Drücken, die zuvor durch das Kunstharz-Druckabtastmittel (4) abgetastet sind, wenn ein übereinstimmender Artikel gegossen worden ist, als Referenzkunstharz-Druckübergangsmuster und
ein Unterscheidungsmittel (114) zum Erkennen der Übereinstimmung eines nachfolgenden Artikels durch Vergleichen jedes Ist-Kunstharz-Drucks, der durch das Druckabtastmittel (4) abgetastet ist, während der Ausführung des gegenwärtigen Gießzyklus, der den nachfolgenden Artikel erzeugt, wobei der Referenzkunstharz-Druck diesem entspricht,
dadurch **gekennzeichnet,** daß wenn das Referenzkunstharz-Druckübergangsmuster und das Kunstharz-Druckübergangsmuster des gegenwärtigen Gießzyklus, wobei letzteres durch die abgetasteten Ist-Kunstharz-Drücke gegeben ist, in bezug aufeinander beispielsweise aufgrund einer Abweichung in der Einspritzbeginnzeitsteuerung zwischen dem gegenwärtigen Gießprozeß und dem Gießprozeß für den übereinstimmenden Artikel verschoben sind, das Unterscheidungsmittel (114) wirksam ist, um diese Verschiebung durch Erfassen der ersten Ist-Kunstharz-Druckabtastprobe, die einen vorbestimmten Druck (Px) übersteigt, und außerdem der ersten Referenzkunstharz-Druckabtastprobe, die den vorbestimmten Druck (Px) übersteigt, und durch Entscheiden, daß diese zwei Abtastproben-Drücke oder die vorhergehenden zwei Abtastproben-Drücke einander in den Druckübergangsmustern entsprechen, wie dies die nachfolgenden Paare von Drücken in den zwei Kunstharz-Druckübergangsmustern tun, zu vergleichen, um dadurch die entsprechenden abgetasteten Drücke zu erzeugen, die wie zuvor angegeben zu vergleichen sind, um die Übereinstimmung eines Artikels zu erkennen, der durch den ausgeführten gegenwärtigen Gießzyklus hergestellt ist.

2. Unterscheidungs-Vorrichtung zur Kontrolle der Artikel-Übereinstimmung für eine Spritzgießmaschine nach Anspruch 1, bei der das Unterscheidungsmittel (114) wirksam ist, um ein Signal auszugeben, das hinweisend auf das Ergebnis der Unterscheidung ist.

3. Unterscheidungs-Vorrichtung zur Kontrolle der Artikel-Übereinstimmung für eine Spritzgießmaschine nach Anspruch 1 oder 2, bei der das Druckabtstmittel (4) wirksam ist, um den Kunstharz-Druck bei Einspritz- u. Haltevorgängen in einem Gießzyklus abzutasten.

## Revendications

1. Un appareil utilisé dans une machine de moulage par injection pour discriminer la conformité d'un objet, comprenant :
des moyens d'échantillonnage de pressions (4) pour échantillonner de manière périodique une pression de résine ;
des moyens à mémoire (110) pour enregistrer des pressions de résine préalablement échantillonnées par lesdits moyens d'échantillonnage de pressions (4) lorsqu'a été moulé un objet conforme, en tant que pressions de résine de référence fournissant un motif de transition des pressions de résine de référence ; et
des moyens de discrimination (114) pour discriminer la conformité d'un objet ultérieur en comparant chaque pression de résine réelle échantillonnée par lesdits moyens d'échantillonnage de pression (4) au cours de l'exécution du cycle de moulage réel produisant ledit objet ultérieur, avec la pression de résine de référence correspondant à celui-ci ;
caractérisé en ce que, lorsque le motif de transition des pressions de résine de référence et le motif de transition des pressions de résine du cycle de moulage réel, ce dernier étant fourni par lesdites pressions de résine réelles échantillonnées, sont décalés l'un par rapport à l'autre du fait, par exemple, d'un écart dans la synchronisation du début d'injection entre le processus de moulage réel et le processus de moulage de l'objet conforme, les moyens de discrimination (114) sont actionnables pour compenser cet écart en détectant le premier échantillon de pression de résine réel qui dépasse une pression (Px) déterminée à l'avance, et également le premier échantillon de pression de résine de référence qui dépasse ladite pression (Px) déterminée à l'avance, et en décidant que ces deux pressions d'échantillon, ou les deux pressions d'échantillon précédentes, correspondent l'une à l'autre sur les deux motifs de transition des pressions de résine, comme le font les paires successives suivantes de pressions sur les deux motifs de transition des pressions de résine, de manière ainsi à fournir les pressions échantillonnées correspondantes devant être comparées comme mentionnées ci-dessus afin de discriminer la conformité d'un objet produit par le cycle de moulage réellement exécuté.

2. Un appareil utilisé dans une machine de moulage par injection pour discriminer la conformité d'un objet selon la revendication 1, dans lequel lesdits moyens de discrimination (114) sont actionnables pour délivrer un signal indicatif du résultat de la discrimination.

3. Un appareil utilisé dans une machine de moulage par injection pour discriminer la conformité d'un objet selon la revendication 1 ou 2, dans lequel lesdits moyens d'échantillonnage de pressions (4) sont actionnables pour échantillonner la pression de résine lors de l'injection et maintenir les processus dans un cycle de moulage.
